# EUROPÄISCHE PATENTSCHRIFT

(11) **EP 2 640 988 B1**
(45) Veröffentlichungstag und Bekanntmachung des Hinweises auf die Patenterteilung: **29.10.2014**
(21) Anmeldenummer: 11797213.3
(22) Anmeldetag: 07.12.2011
(51) Int. Cl.: F16C 33/12

(54) **GLEITLAGER FÜR EINEN TURBOMASCHINENROTOR UND TURBOMASCHINE MIT DEM GLEITLAGER**
PLAIN BEARING FOR A TURBOMACHINE ROTOR AND TURBOMACHINE HAVING THE PLAIN BEARING
PALIER LISSE POUR ROTOR DE TURBOMACHINE ET TURBOMACHINE MUNIE DU PALIER LISSE

(30) Priorität: 19.01.2011 DE 102011002868
(43) Veröffentlichungstag der Anmeldung: 25.09.2013
(73) Patentinhaber: Siemens Aktiengesellschaft, 80333 München (DE)
(72) Erfinder: BODE, Ralf, 47441 Moers (DE); STRADMANN, Norbert, 47166 Duisburg (DE)
(86) Internationale Anmeldenummer: PCT/EP2011/071987
(87) Internationale Veröffentlichungsnummer: WO 2012/097915

(56) Entgegenhaltungen:
- DE-T2- 60 206 632
- DE-T2- 69 728 786
- US-A1- 2003 231 975

## Beschreibung

Die Erfindung betrifft ein Gleitlager für einen Turbomaschinenrotor und eine Turbomaschine, die das Gleitlager aufweist.

Eine Turbomaschine weist prinzipiell einen Rotor auf. Die Turbomaschine ist beispielsweise ein Einwellenverdichter, dessen Rotor eine Welle aufweist, auf der Laufräder aufgefädelt sind. Der Rotor ist an den Längsendbereichen der Welle mittels Lager gelagert. Die Lager sind eingerichtet Radialkräfte und/oder Axialkräfte, die auf den Rotor einwirken, aufzunehmen. Die Lager können Gleitlager insbesondere mit selbstschmierenden Eigenschaften sein. Die Gleitlager weisen einen Lagerkörper in Form einer Buchse auf, in der der Rotor gelagert ist. Es ist bekannt die Buchse aus einem Metallpulver in einem Sintervorgang und einem Pressvorgang herzustellen, wobei insbesondere Eisenpulver für das Metallpulver Anwendung findet.

In Anlagen der chemischen Industrie wird Prozessgas verarbeitet, wobei Turboverdichter zum Aufzudrücken des Prozessgases vorgesehen sind. Ist das Prozessgas chemisch aggressiv, können die Bauteile des Turboverdichters beeinträchtigt werden, die mit dem Prozessgas in Kontakt treten. Beispielsweise wird ein Rohgasverdichter in einer Ethylen-Anlage von Rohgas durchströmt, das schwefelwasserstoffhaltig ist. Bei einem derartigen Betrieb des Rohgasverdichters herrscht eine Sauergasbedingung, deren Definition beispielsweise gemäß ISO 15156 festgelegt ist. Sind die unter der Sauergasbedingung betriebenen Bauteile aus einem hochfesten Stahl gefertigt, so besteht die Gefahr, dass in dem hochfesten Stahl Spannungsrisskorrosion auftritt. Unter dem Einfluss einer mechanischen Belastung beim Betrieb des Turboverdichters kann die Spannungsrisskorrosion eine Beschädigung oder Zerstörung der betroffenen Bauteile zur Folge haben. Dadurch kann in dem Rohgasverdichter ein kapitaler Schaden entstehen. Insbesondere davon betroffen ist das Gleitlager, da das Eisenpulver nicht sauergasbeständig ist.

Abhilfe schaffen könnte statt des Eisenpulvers einen polymeren Werkstoff zu wählen. Dadurch wird zwar erreicht, dass das Gleitlager geeignet für Sauergasanwendungen ist, jedoch hat dieses mit dem polymeren Werkstoff ausgestattete Gleitlager eine deutlich geringere Tragfähigkeit verglichen mit der metallischen, aber sauergasunbeständigen Ausführung.

In der DE 602 06 632 T2 ist ein Lager beschrieben, das aus einem gesinterten Material hergestellt ist, welches eine Mischung aus insbesondere einer oder mehrerer Legierungen und einem festen Schmiermittelpulver aufweist. Das feste Schmiermittelpulver ist ein Bestandteil des gesinterten Materials, aus dem das Lager hergestellt ist.

Aufgabe der Erfindung ist es, ein Gleitlager für einen Turbomaschinenrotor und eine das Gleitlager aufweisende Turbomaschine zu schaffen, wobei die Turbomaschine für eine Sauergasanwendung geeignet ist, obwohl das Gleitlager eine hohe Tragfähigkeit und Lebensdauer hat.

Die Aufgabe wird gelöst mit den Merkmalen der Patentansprüche 1 und 10. Vorteilhafte Ausgestaltungen dazu sind in den weiteren Patentansprüchen angegeben.

Das erfindungsgemäße Gleitlager für den Turbomaschinenrotor weist einen Lagerkörper zum Lagern des Turbomaschinenrotors und ein Festschmierstoffpulver zum Schmieren eines Lagerkontakts zwischen dem Lagerkörper und dem Turbomaschinenrotor auf, wobei der Lagerkörper aus einem sauergasbeständigen mischkristallverfestigtem Pulver eines Nickelbasiswerkstoffs oder einem martensitischen, austenitischen oder ferritisch-austenitischen nichtrostenden Pulver eines Stahlwerkstoffs und das Festschmierstoffpulver aus einem sauergasbeständigen Material hergestellt sind sowie der Lagerkörper eine Härte von höchstens 40 Rockwellhärte HRC hat. Bevorzugt ist es, dass der Werkstoff eine Mischkristalllegierung auf Nickelbasis ist.

Der Werkstoff des Lagerkörpers weist bevorzugt mindestens 19,0 Gew.% Chrom, mindestens 29,5 Gew.% Nickel und Kobalt und mindestens 2,5 Gew.% Molybdän auf und ist bevorzugt lösungsgeglüht oder geglüht. Alternativ ist es bevorzugt, dass der Werkstoff des Lagerkörpers mindestens 14,5 Gew.% Chrom, mindestens 52 Gew.% Nickel und Kobalt und mindestens 12 Gew.% Molybdän aufweist sowie lösungsgeglüht oder geglüht ist. Ferner alternativ bevorzugt ist es, dass der Werkstoff des Lagerkörpers mindestens 19,5 Gew.% Chrom, mindestens 29,5 Gew.% Nickel und Kobalt und mindestens 2,5 Gew.% Molybdän aufweist sowie lösungsgeglüht oder geglüht ist und durch Kaltverfestigung eine Streckgrenze von höchstens 1034 MPa hat. Außerdem alternativ bevorzugt ist es, dass der Werkstoff des Lagerkörpers mindestens 19 Gew.% Chrom, mindestens 45 Gew.% Nickel und Kobalt und mindestens 6 Gew.% Molybdän und Wolfram aufweist sowie lösungsgeglüht oder geglüht ist und durch Kaltverfestigung eine Streckgrenze von höchstens 1034 MPa hat. Bevorzugtermaßen alternativ weist der Werkstoff des Lagerkörpers mindestens 14,5 Gew.% Chrom, mindestens 52 Gew.% Nickel und Kobalt und mindestens 12 Gew.% Molybdän auf und ist bevorzugt lösungsgeglüht oder geglüht und hat durch Kaltverfestigung eine Streckgrenze von höchstens 1240 MPa.

Das Festschmierstoffpulver ist bevorzugt aus Graphit, Molybdändisulfid oder hexagonalem Bornitrid. Ferner weist bevorzugt das Gleitlager eine Lagerbuchse auf, die den Lagerkörper bildet.

Die erfindungsgemäße Turbomaschine weist das Gleitlager auf, wobei die Turbomaschine zum Verarbeiten von Sauergas geeignet ist. Bevorzugt ist es, dass die Turbomaschine ein Turboverdichter zum Verdichten von mit Schwefelwasserstoff kontaminiertem Prozessgas, insbesondere Sauergas, ist.

Das erfindungsgemäße Gleitlager ist mit dem sauergasbeständigen Festschmierstoffpulver als selbstschmierend ausgeführt, wobei für den Lagerkörper das Pulver aus der mischkristallverfestigten Nickelbasislegierung oder das sauergasbeständige martensitsche, austenitische oder ferritisch-austenitische nichtrostende Pulver des Stahlerkstoffs vorgesehen ist, wobei der Werkstoff eine Härte von höchstens 40 Rockwellhärte HRC hat. Dadurch ist das erfindungsgemäße Gleitlager geeignet für die Turbomaschine eingesetzt zu sein, die zum Verarbeiten von Sauergas vorgesehen ist. Dadurch, dass der Werkstoff für den Lagerkörper als auch das Festschmierstoffpulver sauergasbeständig sind, sind sie für das Gleitlager in der Turbomaschine einzusetzen. Der Werkstoff hat vorteilhaft eine hohe Festigkeit, wodurch das Gleitlager eine hohe Tragkraft hat.

Herkömmlich wären beispielsweise für eine Gleitlagerbuchse, die in der mit Sauergas beaufschlagten Turbomaschine eingebaut ist, Buntmetalllegierungen und polymere Werkstoffe vorgesehen. Verglichen mit diesen Werkstoffen hat der erfindungsgemäß vorgesehene Nickelbasis- oder Stahlwerkstoff für den Lagerkörper eine höhere Festigkeit, wodurch das erfindungsgemäße Gleitlager eine höhere Lebensdauer verglichen mit dem herkömmlichen Gleitlager hat.

Anhand von Ausführungsbeispielen wird im Folgenden die Erfindung näher erläutet.

Ein Gleitlager für einen Turbomaschinenrotor weist einen Lagerkörper zum Lagern des Turbomaschinenrotors und ein Festschmierstoffpulver zum Schmieren eines Lagerkontakts zwischen dem Lagerkörper und dem Turbomaschinenrotor auf. Der Lagerkörper ist aus einem sauergasbeständigen, mischkristallverfestigten Nickelbasiswerkstoff oder einem martensitischen, austenitischen oder ferritisch-austenitischen nichtrostenden Pulver eines Stahlwerkstoffs hergestellt, wobei der Lagerkörper eine Härte von höchstens 40 Rockwellhärte HRC hat. Das Festschmierstoffpulver ist aus einem sauergasbeständigen Material wie beispielsweise Graphit, Molybdändisulfid oder hexagonalem Bornitrid hergestellt.

In einem ersten Ausführungsbeispiel weist der Werkstoff des Lagerkörpers mindestens 19,0 Gew.% Chrom, mindestens 29,5 Gew.% Nickel und Kobalt und mindestens 2,5 Gew.% Molybdän auf und ist lösungsgeglüht oder geglüht. In einem zweiten Ausführungsbeispiel weist der Werkstoff des Lagerkörpers mindestens 14,5 Gew.% Chrom, mindestens 52 Gew.% Nickel und Kobalt und mindestens 12 Gew.% Molybdän auf und ist lösungsgeglüht oder geglüht.

Ist das Gleitlager mit dem Lagerkörper ausgestattet, der aus dem Werkstoff gemäß dem ersten Ausführungsbeispiel oder dem Werkstoff gemäß dem zweiten Ausführungsbeispiel hergestellt ist, so ist das Gleitlager für jede denkbare Sauergasanwendung in der Turbomaschine geeignet.

In einem dritten Ausführungsbeispiel weist der Werkstoff des Lagerkörpers mindestens 19,5 Gew.% Chrom, mindestens 29,5 Gew.% Nickel und Kobalt und mindestens 2,5 Gew.% Molybdän auf. Der Werkstoff ist ferner lösungsgeglüht oder geglüht und hat durch Kaltverfestigung eine Streckgrenze von höchstens 1034 MPa. In einem vierten Ausführungsbeispiel weist der Werkstoff des Lagerkörpers mindestens 19 Gew.% Chrom, mindestens 45 Gew.% Nickel und Kobalt und mindestens 6 Gew.% Molybdän und Wolfram auf. Der Werkstoff ist lösungsgeglüht oder geglüht und hat durch Kaltverfestigung eine Streckgrenze von höchstens 1034 MPa. In einem fünften Ausführungsbeispiel weist der Werkstoff des Lagerkörpers mindestens 14,5 Gew.% Chrom, mindestens 52 Gew.% Nickel und Kobalt und mindestens 12 Gew.% Molybdän auf. Der Werkstoff ist ferner lösungsgeglüht oder geglüht und hat durch Kaltverfestigung eine Streckgrenze von höchstens 1240 MPa.

Ist das Gleitlager mit dem Lagerkörper ausgestattet, der aus dem Werkstoff gemäß dem dritten Ausführungsbeispiel oder dem Werkstoff gemäß dem vierten Ausführungsbeispiel hergestellt ist, so ist das Gleitlager in der Turbomaschine für eine Sauergasanwendung geeignet, bei der beispielsweise bei 232 °C Sauergastemperatur ein Partialdruck von Schwefelwasserstoff im Sauergas von maximal 200 kPa, oder bei 218 °C Sauergastemperatur ein Partialdruck von Schwefelwasserstoff im Sauergas von maximal 700 kPa, oder bei 204 °C Sauergastemperatur ein Partialdruck von Schwefelwasserstoff im Sauergas von maximal 1000 kPa, oder bei 177 °C Sauergastemperatur ein Partialdruck von Schwefelwasserstoff im Sauergas von maximal 1400 kPa herrscht. Bis zu einer Sauergastemperatur von 132 °C ist dieses Gleitlager für jeden denkbaren Partialdruck von Schwefelwasserstoff im Sauergas geeignet.

Ist das Gleitlager mit dem Lagerkörper ausgestattet, der aus dem Werkstoff gemäß dem vierten Ausführungsbeispiel oder dem Werkstoff gemäß dem fünften Ausführungsbeispiel hergestellt ist, so ist das Gleitlager in der Turbomaschine für eine Sauergasanwendung geeignet, bei der beispielsweise bei 218 °C Sauergastemperatur ein Partialdruck von Schwefelwasserstoff im Sauergas von maximal 2000 kPa herrscht. Bis zu einer Sauergastemperatur von 149 °C ist dieses Gleitlager für jeden denkbaren Partialdruck von Schwefelwasserstoff im Sauergas geeignet.

Ist das Gleitlager mit dem Lagerkörper ausgestattet, der aus dem Werkstoff gemäß dem fünften Ausführungsbeispiel hergestellt ist, so ist das Gleitlager in der Turbomaschine für eine Sauergasanwendung geeignet, bei der beispielsweise bei 232 °C Sauergastemperatur ein Partialdruck von Schwefelwasserstoff im Sauergas von maximal 7000 kPa herrscht. Bis zu einer Sauergastemperatur von 204 °C ist dieses Gleitlager für jeden denkbaren Partialdruck von Schwefelwasserstoff im Sauergas geeignet.

## Patentansprüche

1. Gleitlager für einen Turbomaschinenrotor, mit einem Lagerkörper zum Lagern des Turbomaschinenrotors und einem Festschmierstoffpulver zum Schmieren eines Lagerkontakts zwischen dem Lagerkörper und dem Turbomaschinenrotor, wobei der Lagerkörper aus einem sauergasbeständigen mischkristallverfestigtem Pulver eines Nickelbasiswerkstoffs oder einem martensitischen, austenitischen oder ferritisch-austenitischen nichtrostenden Pulver eines Stahlwerkstoffs und das Festschmierstoffpulver aus einem sauergasbeständigen Material hergestellt sind sowie der Lagerkörper eine Härte von höchstens 40 Rockwellhärte HRC hat.

2. Gleitlager gemäß Anspruch 1,
wobei der Werkstoff eine Mischkristalllegierung auf Nickelbasis ist.

3. Gleitlager gemäß Anspruch 2,
wobei der Werkstoff des Lagerkörpers mindestens 19,0 Gew.% Chrom, mindestens 29,5 Gew.% Nickel und Kobalt und mindestens 2,5 Gew.% Molybdän aufweist sowie lösungsgeglüht oder geglüht ist.

4. Gleitlager gemäß Anspruch 2,
wobei der Werkstoff des Lagerkörpers mindestens 14,5 Gew.% Chrom, mindestens 52 Gew.% Nickel und Kobalt und mindestens 12 Gew.% Molybdän aufweist sowie lösungsgeglüht oder geglüht ist.

5. Gleitlager gemäß Anspruch 2,
wobei der Werkstoff des Lagerkörpers mindestens 19,5 Gew.% Chrom, mindestens 29,5 Gew.% Nickel und Kobalt und mindestens 2,5 Gew.% Molybdän aufweist sowie lösungsgeglüht oder geglüht ist und durch Kaltverfestigung eine Streckgrenze von höchstens 1034 MPa hat.

6. Gleitlager gemäß Anspruch 2,
wobei der Werkstoff des Lagerkörpers mindestens 19 Gew.% Chrom, mindestens 45 Gew.% Nickel und Kobalt und mindestens 6 Gew.% Molybdän und Wolfram aufweist sowie lösungsgeglüht oder geglüht ist und durch Kaltverfestigung eine Streckgrenze von höchstens 1034 MPa hat.

7. Gleitlager gemäß Anspruch 2,
wobei der Werkstoff des Lagerkörpers mindestens 14,5 Gew.% Chrom, mindestens 52 Gew.% Nickel und Kobalt und mindestens 12 Gew.% Molybdän aufweist sowie lösungsgeglüht oder geglüht ist und durch Kaltverfestigung eine Streckgrenze von höchstens 1240 MPa hat.

8. Gleitlager gemäß einem der Ansprüche 1 bis 7,
wobei das Festschmierstoffpulver aus Graphit, Molybdändisulfid oder hexagonalem Bornitrid ist.

9. Gleitlager gemäß einem der Ansprüche 1 bis 8,
wobei das Gleitlager eine Lagerbuchse aufweist, die den Lagerkörper bildet.

10. Turbomaschine mit einem Gleitlager gemäß einem der Ansprüche 1 bis 9,
wobei die Turbomaschine zum Verarbeiten von Sauergas geeignet ist.

11. Turbomaschine gemäß Anspruch 10,
wobei die Turbomaschine ein Turboverdichter zum Verdichten von mit Schwefelwasserstoff kontaminiertem Prozessgas, insbesondere Sauergas, ist.

## Claims

1. Plain bearing for a turbomachine rotor, having a bearing body for mounting the turbomachine rotor and a solid lubricant powder for lubricating a bearing contact between the bearing body and the turbomachine rotor, wherein the bearing body is produced from an acid-gas-resistant, solid-solution-strengthened powder of a nickel-based material or from a martensitic, austenitic or ferriticaustenitic non-rusting powder of a steel material, and the solid lubricant powder is produced from an acid-gas-resistant material, and also the bearing body has a hardness of at most 40 Rockwell hardness HRC.

2. Plain bearing according to Claim 1,
wherein the material is a nickel-based solid solution alloy.

3. Plain bearing according to Claim 2,
wherein the material of the bearing body comprises at least 19.0% by weight chromium, at least 29.5% by weight nickel and cobalt and at least 2.5% by weight molybdenum, and also is solution-annealed or annealed.

4. Plain bearing according to Claim 2,
wherein the material of the bearing body comprises at least 14.5% by weight chromium, at least 52% by weight nickel and cobalt and at least 12% by weight molybdenum, and also is solution-annealed or annealed.

5. Plain bearing according to Claim 2,
wherein the material of the bearing body comprises at least 19.5% by weight chromium, at least 29.5% by weight nickel and cobalt and at least 2.5% by weight molybdenum, and also is solution-annealed or annealed and, owing to cold work-hardening, has a yield strength of at most 1034 MPa.

6. Plain bearing according to Claim 2,
wherein the material of the bearing body comprises at least 19% by weight chromium, at least 45% by weight nickel and cobalt and at least 6% by weight molybdenum and tungsten, and also is solution-annealed or annealed and, owing to cold work-hardening, has a yield strength of at most 1034 MPa.

7. Plain bearing according to Claim 2,
wherein the material of the bearing body comprises at least 14.5% by weight chromium, at least 52% by weight nickel and cobalt and at least 12% by weight molybdenum, and also is solution-annealed or annealed and, owing to cold work-hardening, has a yield strength of at most 1240 MPa.

8. Plain bearing according to one of Claims 1 to 7,
wherein the solid lubricant powder is made of graphite, molybdenum disulfide or hexagonal boron nitride.

9. Plain bearing according to one of Claims 1 to 8,
wherein the plain bearing has a bearing bushing, which forms the bearing body.

10. Turbomachine having a plain bearing according to one of Claims 1 to 9,
wherein the turbomachine is suitable for processing acid gas.

11. Turbomachine according to Claim 10,
wherein the turbomachine is a turbo-compressor for compressing process gas, in particular acid gas, contaminated with hydrogen sulfide.

## Revendications

1. Palier lisse pour rotor de turbomachine, comprenant un corps de palier pour supporter le rotor de turbomachine et une poudre de lubrifiant solide pour lubrifier un contact de palier entre le corps de palier et le rotor de turbomachine, le corps de palier étant fabriqué en une poudre résistant au gaz acide et consolidée en cristal mixte d'un matériau à base de nickel ou d'une poudre inoxydable martensitique, austénitique ou ferritique-austénitique d'un matériau d'acier et la poudre de lubrifiant solide en un matériau résistant au gaz acide, le corps de palier ayant une dureté d'au plus 40 Rockwel HRC.

2. Palier lisse suivant la revendication 1,
dans lequel le matériau est un alliage de cristal mixte à base de nickel.

3. Palier lisse suivant la revendication 2,
dans lequel le matériau du corps de palier comprend au moins 19,0% en poids de chrome, au moins 29,5% en poids de nickel et de cobalt et au moins 2,5% en poids de molybdène et a été soumis à un recuit de mise en solution ou à un recuit.

4. Palier lisse suivant la revendication 2,
dans lequel le matériau du corps de palier comprend au moins 14,5% en poids de chrome, au moins 52% en poids de nickel et de cobalt et au moins 12% en poids de molybdène et a été soumis à un recuit de mise en solution ou à un recuit.

5. Palier lisse suivant la revendication 2,
dans lequel le matériau du corps de palier comprend au moins 19,5% en poids de chrome, au moins 29,5% en poids de nickel et de cobalt et au moins 2,5% en poids de molybdène, a été soumis à un recuit de mise en solution ou à un recuit et a par écrouissage une limite élastique d'au plus 1034 mPa.

6. Palier lisse suivant la revendication 2,
dans lequel le matériau du corps de palier comprend au moins 19% en poids de chrome, au moins 45% en poids de nickel et de cobalt et au moins 6% en poids de molybdène et de tungstène, a été soumis à un recuit de mise en solution ou à un recuit et a par écrouissage une limite élastique d'au plus 1034 mPa.

7. Palier lisse suivant la revendication 2,
dans lequel le matériau du corps de palier comprend au moins 14,5% en poids de chrome, au moins 52% en poids de nickel et de cobalt et au moins 12% en poids de molybdène, a été soumis à un recuit de mise en solution ou à un recuit et a par écrouissage une limite élastique d'au plus 1240 mPa.

8. Palier lisse suivant l'une des revendications 1 à 7,
dans lequel la poudre de lubrifiant solide est en graphite, en disulfure de molybdène ou en nitrure de bore hexagonal.

9. Palier lisse suivant l'une des revendications 1 à 8,
dans lequel le palier lisse a un coussinet de palier, qui forme le corps du palier.

10. Turbomachine ayant un palier lisse suivant l'une des revendications 1 à 9,
dans laquelle la turbomachine est propre à traiter du gaz acide.

11. Turbomachine suivant la revendication 10,
dans laquelle la turbomachine est un turbocompresseur pour comprimer du gaz de processus pollué par de l'hydrogène sulfuré, en étant notamment du gaz acide.
